# EUROPÄISCHE PATENTSCHRIFT

(11) **EP 1 470 951 B1**
(45) Veröffentlichungstag und Bekanntmachung des Hinweises auf die Patenterteilung: **24.10.2007**
(21) Anmeldenummer: 04008811.4
(22) Anmeldetag: 14.04.2004
(51) Int. Cl.: B60N 2/08, G05G 5/18, G05G 5/24

(54) **Ratschenartige Verstellvorrichtung**
Ratchet adjusting device
Dispositif de réglage à cliquets

(30) Priorität: 26.04.2003 DE 10318939; 06.03.2004 DE 102004011054
(43) Veröffentlichungstag der Anmeldung: 27.10.2004
(73) Patentinhaber: GRAMMER AG, 92224 Amberg (DE)
(72) Erfinder: Raum, Holger, 92237 Sulzbach-Rosenberg (DE)
(74) Vertreter: Hannke, Christian

(56) Entgegenhaltungen:
- DE-A1- 4 321 720
- DE-A1- 10 039 501

## Beschreibung

Die Erfindung betrifft eine ratschenartige Verstellvorrichtung zum ratschenden Verschieben eines Verstellkörpers gegenüber einem ortsfesten Basiselement mittels eines länglichen Betätigungselements mit beidseitig des Betätigungselements an dem Verstellkörper angebrachten Linearverzahnungen gemäß dem Oberbegriff des Patentanspruches 1.

Derartige linear ausgebildete ratschenartige Verstellvorrichtungen werden beispielsweise in Fahrzeugsitzen verwendet, um eine Sitzplatte des Fahrzeugsitzes in Bezug auf ein Grundgestell wunschgemäß nach vorne oder nach hinten zu schieben. Ebenso werden derartige Verstellvorrichtungen zum schrittweise ratschenden Verstellen eines Verstellkörpers mittels eines länglichen Betätigungselementes dafür verwendet, eine Höheneinstellung der Sitzplatte durchzuführen.

Aus der DE 100 39 501 A1 ist eine ratschenartige Verstellvorrichtung bekannt, die einen gegenüber einem ortsfesten Basiselement, wie beispielsweise das Grundgestell einer Sitzplatte, einen verschiebbaren Verstellkörper, der mit der Sitzpatte verbunden ist, aufweist. Der Verstellkörper kann mittels eines länglich ausgebildeten plattenförmigen Betätigungselementes, an dessen Ende ein Handgriff angeordnet ist, gegenüber dem Basiselement verschoben werden, indem zwei an dem Betätigungselement schwenkbar gelagerte axial voneinander beabstandete Ratschenelemente, die miteinander einen Öffnungswinkel einschließen, in eine Linearverzahnung des Verstellkörpers eingreifen.

Durch das Eingreifen beziehungsweise Einrasten der Ratschenelemente in die Linearverzahnung findet eine Mitnahme des Verstellkörpers bei Verschieben des Betätigungselementes statt.

Für die Erzielung des Ratscheneffektes kann das Betätigungselement gegenüber dem Verstellkörper wieder zurückbewegt werden, indem das gegen diese Verschiebebewegung gerichtete Ratschenelement mittels eines basiselementfesten Ausrastorganes aus der Linearverzahnung ausgerastet wird. Hierbei ist das gegen eine vorwärts gerichtete Verschiebebewegung des Betätigungselements wirkende Ratschenelement aufgrund der Öffnungswinkelstellung derart angeordnet, dass es rückwärts über Zähne der Linearverzahnung schabt.

Bei einer derartigen Verstellvorrichtung sind jeweils zwei Ratschenelemente im Bereich erster und zweiter Längsseiten des Betätigungselementes schwenkbar in dem Betätigungselement gelagert. Hierdurch wird zwar je nach Verschiebestellung des Betätigungselementes und der damit verbundenen Ratschenelemente bezüglich der beidseitig zu dem Betätigungselement angeordneten Linearverzahnungen eine Arretierung des Betätigungselements bezüglich des Verstellkörpers erreicht, jedoch ist keine Arretierungsvorrichtung zum Arretieren des Verstellkörpers oder des Betätigungselementes gegenüber dem ortsfesten Basiselement vorgesehen. Demzufolge besteht die Gefahr des ungewollten Verschiebens des Verstellkörpers gegenüber dem ortsfesten Basiselement.

Die jeweils einer Linearverzahnung zugeordneten zwei Ratschenelemente weisen an ihren Stirnseiten ebenso wie die Zähne der Linearverzahnung relativ klein ausgebildete Zahngrößen auf, wobei die Zähne der Ratschenelemente in die zickzackförmige Linearverzahnung nach Durchlaufen des Ausrastorgans in einem relativ steilen Winkel innerhalb kürzester Zeit eingreifen. Dies kann zu einer vorzeitigen Abnutzung der Zähne sowohl der Linearverzahnung als auch der Ratschenelemente führen, sofern große Verstellkräfte zur Verschiebung des Verstellkörpers eingesetzt werden.

Weiterhin ist bei einer derartigen Verstellvorrichtung kein Anschlag für das Beenden einer vorwärts gerichteten Verschiebebewegung des Betätigungselementes mit dem Verstellkörper vorgesehen. Dies ermöglicht eine unkontrollierte Verschiebebewegung des Verstellkörpers gegenüber dem ortsfesten Basiselement.

Demzufolge liegt der vorliegenden Erfindung die Aufgabe zugrunde, eine ratschenartige Verstellvorrichtung zum ratschenden Verschieben eines Verstellkörpers gegenüber einem ortsfesten Basiselement mittels eines länglichen Betätigungselements zur Verfügung zu stellen, bei der die Verschiebebewegungen des Verstellkörpers gegenüber dem ortsfesten Basiselement und des Betätigungselementes gegenüber dem Verstellkörper besser kontrolliert werden können.

Diese Aufgabe wird gemäß den Merkmalen des Patentanspruches 1 gelöst.

Ein wesentlicher Punkt der Erfindung liegt darin, dass bei einer ratschenartigen Verstellvorrichtung, bei der ein längliches Betätigungselement entlang beidseitig an einem Verstellkörper angebrachten Linearverzahnungen verschiebbar ist, das Betätigungselement mittels erster Ratschenelemente in eine erste Linearverzahnung einrastbar ist und an einem ortsfesten Basiselement zwei zweite Ratschenelemente gelagert sind, die zum Sperren einer Verschiebebewegung des Verstellkörpers gegenüber dem ortsfesten Basiselement dienen und in die zweite Linearverzahnung einrastbar sind. Hierbei wirkt die erste Linearverzahnung als Anund Abtriebsverzahnung zum An- und Abtreiben des Verstellkörpers mittels des Betätigungselementes und die zweite Linearverzahnung als Sperr- und Bremsverzahnung zum Abbremsen beziehungsweise Sperren der Verschiebebewegung des Betätigungselementes und des Verstellkörpers gegenüber dem ortsfesten Basiselement. Aufgrund der Verbindung der zweiten Ratschenelemente mit dem Basiselement mittels Schwenklagerungen wird eine Ratschverbindung zwischen dem Basiselement und dem Verstellkörper geschaffen, die dazu führt, dass ein ungewolltes Verschieben des Verstellkörpers gegenüber dem Basiselement vermieden werden kann.

Die Linearverzahnungen dienen zugleich als Führungsbegrenzungen für das verschiebbare Betätigungselement, wobei der Verstellkörper und das längliche Betätigungselement plattenförmig ausgebildet sind. Es kann sich hierbei um Stanzblechteile handeln. Die auf dem Verstellkörper angebrachten Linearverzahnungen weisen zusammen mit dem länglichen Betätigungselement und den Ratschenelementen mit Ausnahme derer Schwenklagerungen die gleiche Dicke auf. Sie sind auf dem Verstellkörper nebeneinander angeordnet, so dass eine geringe Gesamtdicke der erfindungsgemäßen Verstellvorrichtung erreicht wird. Auf diese Weise kann die Verstellvorrichtung vorteilhaft platzsparend in einem Fahrzeugsitz eingebaut werden.

Mit der erfindungsgemäßen Verstellvorrichtung ist eine lineare schrittweise ratschende Verstellung des Verstellkörpers im Bezug auf das ortsfeste Basiselement möglich, wodurch eine schnelle und zeitsparende Verstellung des Fahrzeugsitzes möglich ist.

Jedes zweite Ratschenelement kann mittels mindestens eines entlang einer Längsseite des Betätigungselementes ausgebildeten Vorsprunges durch Verschieben des Betätigungselementes schwenkend aus der Linearverzahnung ausgerastet werden, so dass durch die Verschiebebewegung des Betätigungselementes ein gesteuertes Ein- und Ausrasten der zweiten Ratschenelemente möglich ist. Bei einer Stellung der mit einem Abstand zueinander angeordneten zweiten Ratschenelemente mit jeweils einem spitzen Winkel zur Verlaufsrichtung der zweiten Linearverzahnung wird durch geeignete Anordnung der Vorsprünge entlang der Längsseite des Betätigungselementes erreicht, dass eines der Ratschenelemente ausgerastet werden kann, um so die Verschiebebewegung in eine vorbestimmte Richtung zu ermöglichen.

Hierfür sind die Ratschenelemente in einem Winkel derart entgegengesetzt zueinander angeordnet, dass das eine Ratschenelement eine vorwärts gerichtete Verschiebebewegung und das zweite Ratschenelement eine rückwärts gerichtete Verschiebebewegung des Verstellkörpers blockiert beziehungsweise bremst. Auf diese Weise wird ein automatisches Freigeben der Verschiebebewegung des Verstellkörpers gegenüber dem ortsfesten Basiselement durch Verschieben des Betätigungselementes erreicht.

Die Zähne der zweiten Linearverzahnung sind derart ausgebildet, dass ihre abgeschrägten Flanken ein schräges Dagegendrücken von Stirnseiten der zweiten Ratschenelemente zulassen. Dies ermöglicht eine Verwendung von vergleichsweise groß ausgebildeten Zähnen, wodurch eine vorzeitige Abnutzung der Zähne vermieden wird.

Die zweiten Ratschenelemente werden gemäß einer bevorzugten Ausführungsform mittels mindestens einer die Ratschenelemente verbindenden Zugfeder unter Federkraftbeaufschlagung gegen die zweite Linearverzahnung gedrückt und sind derart ausgebildet, dass ihre Endstücke durch die Vorsprünge entgegen der Federkraftbeaufschlagung zum Wegbewegen der Ratschenelemente von der Linearverzahnung ausgelenkt werden können.

Gemäß einer bevorzugten Ausführungsform sind die ersten Ratschenelemente in dem Betätigungselement um eine senkrecht zu Verschiebebewegung ausgerichtete fiktive Schwenkachse schwenkbar gelagert. Beispielsweise kann dies durch die Anordnung von zwei voneinander beabstandeter kreisrunder Aussparungen entlang einer weiteren Längsseite des Betätigungselementes erreicht werden, wobei in die kreisrunden Aussparrungen jeweils ein Ratschenelement mit einem kreisrundenartigen Lagerabschnitt schwenkbeweglich gelagert wird. Somit wird auf einfache Weise eine platzsparende Lagerung der ersten Ratschenelemente bezüglich der Gesamtdicke der Verstellvorrichtung erreicht.

Das ortsfeste Basiselement weist Ausnehmungen auf, die Zapfen zugeordnet sind, welche wiederum auf den ersten Ratschenelementen angeordnet sind. Die Ausnehmungen dienen dazu, die ersten Ratschenelemente mittels der orthogonal zur Verschieberichtung ausgerichteten Zapfen in ihrer Schwenkbewegung in Abhängigkeit von der Verschiebeposition des Betätigungselementes gegenüber dem Verstellkörper und in Abhängigkeit von der Verschieberichtung des Betätigungselementes zu steuern. Hierfür weisen die Ausnehmungen jeweils einen derartigen Randverlauf auf, dass mittels eines Entlanggleitens des Zapfens an den Rändern während der Verschiebung des Betätigungselementes eine ausrastende Schwenkbewegung des einen Ratschenelementes und eine einrastende Schwenkbewegung des weiteren Ratschenelementes erreicht wird. Dies hat zur Folge, dass lediglich dasjenige Ratschenelement im eingerasteten Zustand angeordnet ist, welches für die Mitnahme des Verstellkörpers durch das Betätigungselement in eine vorbestimmte Richtung zuständig ist.

Sobald die Zapfen am Ende der Ausnehmungen während einer vorwärts gerichteten Verschiebebewegung des Betätigungselementes angekommen sind, dient das Ende der Ausnehmungen als Anschlag für die Beendigung der vorwärts gerichteten Verschiebebewegung des Betätigungselementes. Anschließend findet eine rückwärts gerichtete Verschiebebewegung des Betätigungselementes statt, die dazu führt, dass das andere erste Ratschenelement aufgrund des Randverlaufes der Ausnehmungen nach einer vorbestimmten zurückgelegten Strecke in die erste Linearverzahnung einrastet. Auf diese Weise kann mittels der ersten Ratschenelemente, die nun beide im eingerasteten Zustand vorliegen, eine zusätzliche Sperrwirkung bezüglich jeglicher Verschiebung des Betätigungselementes gegenüber dem Verstellkörper erreicht werden.

Gemäß einer bevorzugten Ausführungsform ist die erste Linearverzahnung derart ausgebildet, dass sie an ihren Enden Endzähne, vorzugsweise jeweils einen Endzahn, aufweist, deren Längenabmessungen in Bezug auf die Verschieberichtung größer als Längenabmessungen der restlichen Zähne der ersten Linearverzahnung sind. Diese Längenabmessungen der Endzähne können beispielsweise die zweifache Längenabmessung der restlichen Zähne betragen. Auf diese Weise wird eine automatische Endlagenabschaltung der gesamten ratschenartigen Verstellvorrichtung zur Verfügung gestellt, in dem das als Antrieb wirkende erste oder zweite Ratschenelement außer Eingriff gebracht wird, also nicht mehr mit seinen Zähnen in die Zähne der ersten Linearverzahnung eingreift. Dies hat zur Folge, dass der Verstellkörper nicht mehr weiter verschoben werden kann.

Weitere vorteilhafte Ausführungsformen ergeben sich aus den Unteransprüchen.

Vorteile und Zweckmäßigkeit sind der nachfolgenden Beschreibung in Verbindung mit der Zeichnung zu entnehmen. Hierbei zeigen:
- Fig. 1: in einer Draufsicht eine erste Ausführungsform der erfindungsgemäßen Verstellvorrichtung mit einem unverschobenen Verstellkörper;
- Fig. 2: eine räumliche Explosionsdarstellung der ersten Ausführungsform der erfin dungsgemäßen Verstellvorrichtung mit dazugehörigen wesentlichen Teilen;
- Fig. 3: in einer Draufsicht die erste Ausführungsform der erfindungsgemäßen Verstellvorrichtung zu Beginn einer Verschiebebewegung des Betätigungselementes;
- Fig. 4: in einer Draufsicht die erste Ausführungsform der erfindungsgemäßen Verstellvorrichtung mit einem verschobenen Verstellkörper während einer vorwärts gerichteten Verschiebebewegung;
- Fig. 5: in einer Draufsicht die erste Ausführungsform der erfindungsgemäßen Verstellvorrichtung mit einem verschobenen Verstellkörper zum Zeitpunkt einer rückwärts gerichteten Verschiebebewegung des Betätigungselementes;
- Fig. 6: in einer Draufsicht die erste Ausführungsform der erfindungsgemäßen Verstellvorrichtung zu Beginn einer Verschiebebewegung des Betätigungselementes zum Einleiten einer rückwärts gerichteten Verschiebebewegung des Verstellkörpers;
- Fig. 7: in einer Draufsicht die erste Ausführungsform der erfindungsgemäßen Verschiebevorrichtung mit dem in Gegenrichtung verschobenen Verstellkörper;
- Fig. 8: in einer Draufsicht eine zweite Ausführungsform der erfindungsgemäßen Verstellvorrichtung mit einem unverschobenen Verstellkörper;
- Fig. 9: in einer Draufsicht die zweite Ausführungsform der erfindungsgemäßen Verstellvorrichtung mit einem verschobenen Verstellkörper in einer ersten Endstellung; und
- Fig. 10: in einer Draufsicht die zweite Ausführungsform der erfindungsgemäßen Verstellvorrichtung mit einem verschobenen Verstellkörper in einer zweiten Endstellung.

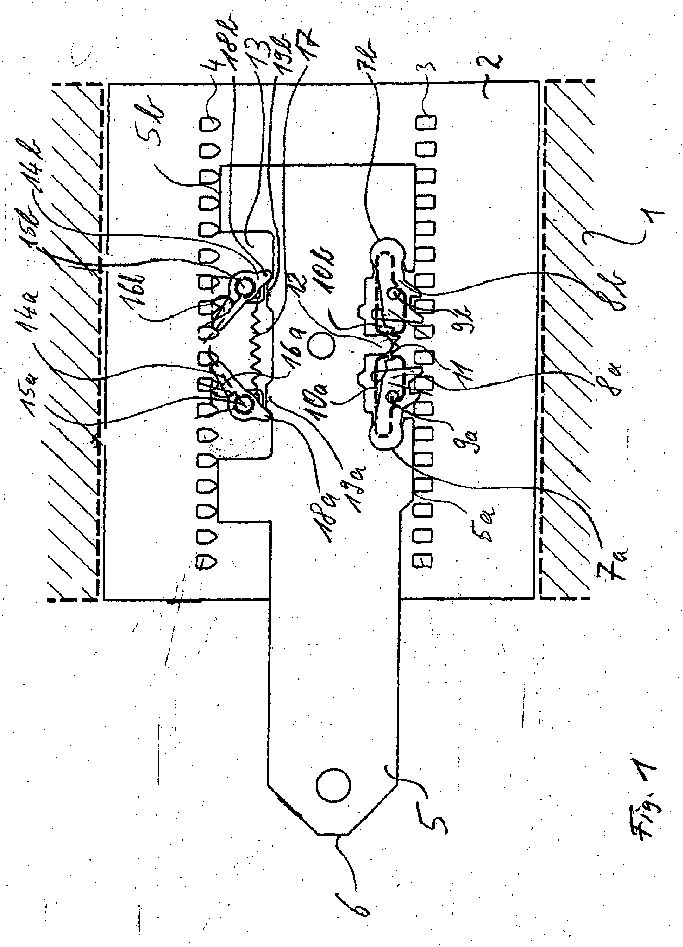

Fig. 1 zeigt in einer Draufsicht eine ersten Ausführungsform der ratschenartigen Verstellvorrichtung zum ratschenden Verschieben eines Verstellkörpers gegenüber einem ortsfesten Basiselement mittels eines länglichen Betätigungselementes mit dem Verstellkörper in mittlerer Position - also einer Nullstellung - , bei der der Verstellkörper unverschoben gegenüber dem Basiselement vorliegt. Die erfindungsgemäße ratschenartige Verstellvorrichtung umfasst den in dem ortsfesten Basiselement 1 verschiebbar angeordneten Verstellkörper 2, der eine erste Linearverzahnung 3 und eine parallel dazu verlaufende zweite Linearverzahnung 4 an seiner Oberfläche aufweist.

Sowohl das Basiselement 1 als auch der Verstellkörper 2 und ein Betätigungselement 5 sind plattenartig ausgebildet, dass heißt sie weisen eine geringe Dicke auf.

Das Betätigungselement 5 ist zwischen der ersten und zweiten Linearverzahnung 3, 4 verschiebbar angeordnet, indem die Aneinanderreihung der einzelnen Zähne der Linearverzahnungen als Führungsbegrenzungen für erste und zweite Längsseiten 5a, 5b des Betätigungselementes 5 dienen.

Da die Linearverzahnungen 3, 4 und das Betätigungselement 5 im wesentlichen gleiche Dicken aufweisen, kann die Gesamtkonstruktion mittels eines hier nicht gezeigten Abdeckbleches auf einfache Weise oberseitig abgedeckt werden, um Verschmutzungen und Beeinflussungen der Funktionsweise der Verstellvorrichtung durch andere Gegenstände zu vermeiden.

Das Betätigungselement 5 weist an seinem einen offenen Ende 6 einen hier nicht gezeigten Handgriff auf, der dazu dient, das Betätigungselement 5 hin und her beziehungsweise vorund rückwärts zu bewegen, um eine lineare, schrittweise ratschende Verstellung des Verstellkörpers 2 relativ zu dem ortsfesten Basiselement 1 zu erreichen.

Das Betätigungselement 5 weist an seiner ersten Längsseite 5a kreisrunde Aussparungen 7a, 7b auf, die voneinander beabstandet sind und zur lagernden Aufnahme eines kreisrundenartigen Lagerabschnittes von ersten Ratschenelementen 8a, 8b dient. Auf diese Weise findet eine schwenkbare Lagerung der ersten Ratschenelemente 8a, 8b innerhalb des Betätigungselementes 5 statt.

Die Ratschenelemente 8a, 8b weisen oberseitig Zapfen 9a, 9b auf, die senkrecht zu der Verschiebebewegung des Betätigungselementes, die im Bezug auf die Bildebene der Fig. 1 links- und rechtsseitig ausgerichtet ist, sich erstrecken. Die Zapfen 9a, 9b greifen in Ausnehmungen 10a, 10b ein, die innerhalb des ortsfesten Basiselementes, das sich in diesem Bereich in hier nicht gezeigter Form über die ersten Ratschenelemente erstreckt, angeordnet sind.

Die Ausnehmungen 10a, 10b dienen zur Führung der Zapfen 9a, 9b und veranlassen in Abhängigkeit von ihrem spezifischen Randverlauf vorbestimmte Schwenkbewegungen der ersten Ratschenelemente 8a, 8b durch Entlanggleiten der Zapfen 9a, 9b entlang des Randes der Ausnehmungen 10a, 10b.

Um ein anhaltendes Einrasten der ersten Ratschenelemente 8a, 8b in die Zähne der ersten Linearverzahnung 3 sicherzustellen, sind die ersten Ratschenelemente mittels einer Zugfeder 11 federkraftbeaufschlagt. Die Federkraft der Zugfeder 11 bewirkt ein Drücken der Ratschenelemente 8a, 8b gegen die Zähne der ersten Linearverzahnung 3 und wirkt entgegen einer zum Ausrasten der Ratschenelemente 8a, 8b durchführbaren Schwenkbewegung, indem die Zugfeder über einen Vorsprung 12, der im Bereich der ersten Längsseite 5a des Betätigungselementes 5 angeordnet ist, umgelenkt wird.

In einer Ausnehmung 13 entlang der zweiten Längsseite 5b des Betätigungselementes 5 sind zwei zweite Ratschenelemente 14a, 14b angeordnet, die gegen die als Brems- und Sperrverzahnung wirkende Linearverzahnung 4 gedrückt werden. Die zweiten Ratschenelemente 14a, 14b wirken als Bremsen und sind mittels aus der Bildebene herausragenden Zapfen 15a, 15b schwenkbar an dem ortsfesten Basiselement 1, das sich in diesem Bereich über die Bremsen 14a, 14b erstreckt, wie es in dieser Figur allerdings nicht gezeigt wird, schwenkbar gelagert.

Vorteilhaft sind die Bremsen 14a, 14b in einem spitzen Winkel 16a, 16b derart gegenüber der Linearverzahnung gestellt, dass die eine Bremse 14a entgegen einer vorwärts gerichteten Verschiebebewegung und die weitere Bremse 14b entgegen einer rückwärts gerichteten Verschiebebewegung wirken können.

Um ein Einrasten der Bremsen 14a, 14b in die zweite Linearverzahnung 4 sicherzustellen, sind die beiden Bremsen mittels einer Zugfeder 17 federkraftbeaufschlagt.

Durch Verschieben des Betätigungselementes 5 ist es möglich, rückwärtige Endstücke 18a, 18b der Bremsen 14a, 14b mittel innerhalb der Ausnehmung 13 angeordneten Vorsprünge 19a, 19b in vorbestimmter Weise auszulenken und dadurch ein Ausrasten einer der Bremsen zu erreichen. Dies führt zu einer Freigabe der zwischen dem Betätigungselement 5 und dem Verstellkörper 2 bestehenden Arretierung in eine der beiden Verschieberichtungen.

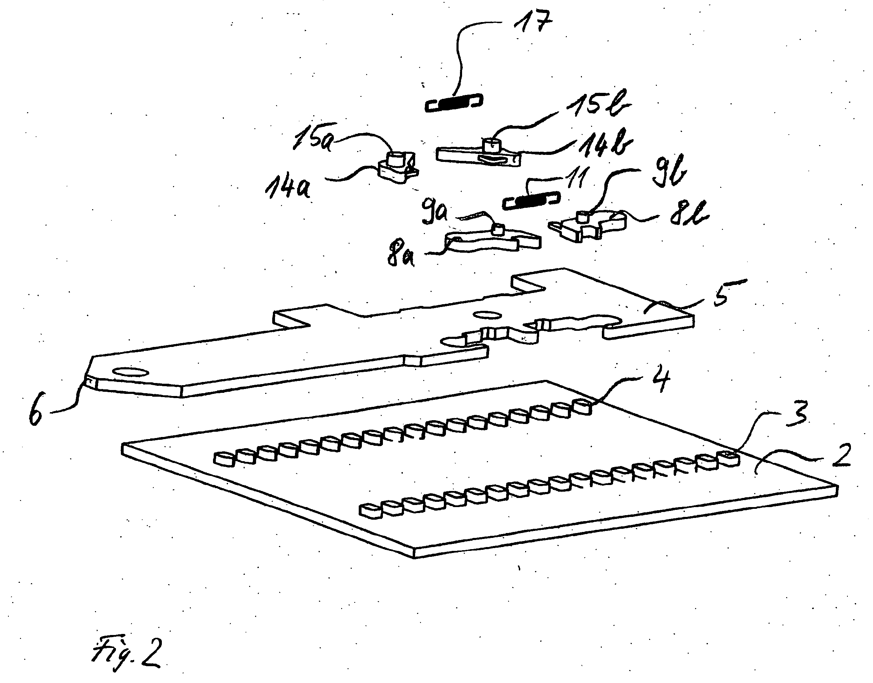

In Fig. 2 wird nochmals zur Verdeutlichung des Aufbaus der erfindungsgemäßen Verstellvorrichtung in einer räumlichen Explosionsdarstellung ohne Darstellung des ortsfesten Basiselementes die Verstellvorrichtung gezeigt. Wie der in Fig. 2 gezeigten Darstellung der Verstellvorrichtung zu entnehmen ist, sind sowohl der Verstellkörper 2 als auch das Betätigungselement 5 und die ersten und zweiten Ratschenelemente 8a, 8b, 14a, 14b mit einer geringen Dickenabmessung ausgestatten, so dass die Gesamtdicke der erfindungsgemäßen Verstellvorrichtung gering ist.

Hierbei weisen das Betätigungselement 5 und die ersten und zweiten Ratschenelemente 8a, 8b, 14a, 14b die gleiche Dicke auf.

Der in Fig. 2 wiedergegebenen Darstellung ist deutlich zu entnehmen, dass die Ratschenelemente oberseitig Zapfen 9a, 9b, 15a, 15b aufweisen, die zum Führen der ersten Ratschenelemente 8a, 8b innerhalb der Ausnehmungen 10a, 10b und zur schwenkbaren Lagerung der Bremsen 14a, 14b innerhalb des ortsfesten Basiselementes 1 dienen.

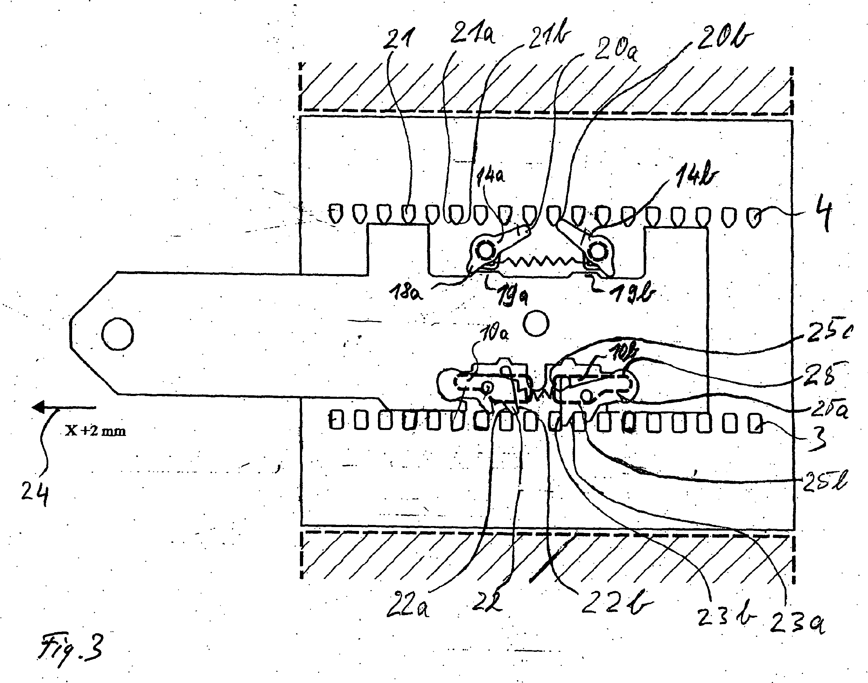

Fig. 3 zeigt die erfindungsgemäße Verstellvorrichtung zu Beginn eines vorwärts gerichteten Verstellvorganges. Hierfür wird das Betätigungselement 5 um 2 mm nach links verschoben. Die Verschiebung des Betätigungselementes gegenüber dem Verstellkörper 2 wird durch den Pfeil 24 angedeutet

Auf diese Weise findet vor Beginn der Verschiebung des Verstellkörpers 2 eine vollständige Einrastung des ersten Ratschenelementes 8b in die erste Linearverzahnung 3, die als Anund Abtriebsverzahnung dient, statt. Sowohl diese vollständige Einrastung des ersten Ratschenelementes 8b als auch ein Ausrasten des ersten Ratschenelementes 8a werden durch den Verlauf der Zapfen 9b, 9a entlang des Randes 25 der Ausnehmungen 10b, 10a bestimmt.

Aufgrund der Verschiebung des Betätigungselementes 5 wird das rückwärtige Ende 18a durch den Vorsprung 19a verschwenkt, wodurch eine Stirnseite 20a der Bremse 14a von Zähnen 21 der Bremsverzahnung 4 wegbewegt wird. Eine Stirnseite 20b der Bremse 14b dagegen bleibt weiterhin in Kontakt mit den Zähnen 21.

Durch die Ausrastschwenkbewegung der Bremse 14a wird eine Verschiebung des Verstellkörpers 2 nach links bezogen auf die Bildebene gegenüber dem Basiselement 1 erst möglich, da zuvor die mit dem Basiselement verbundene Bremse 14a eine Arretierung des Verstellkörpers 2 gegenüber dem Basiselement 1 bewirkte.

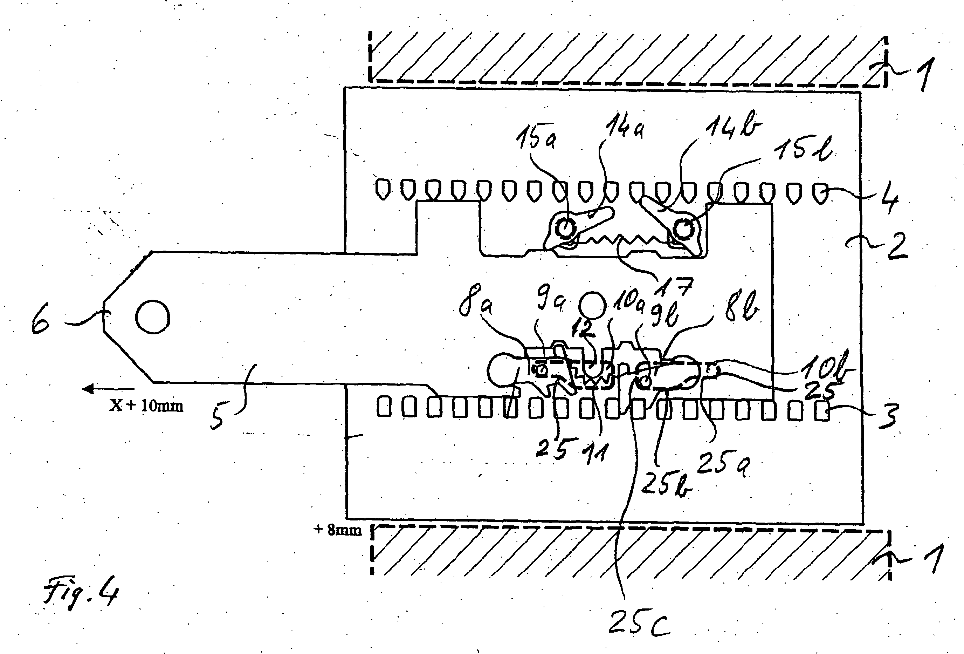

In Fig. 4 wird in eine Draufsicht die erfindungsgemäße Verstellvorrichtung am Ende des vorwärts gerichteten Verstell- beziehungsweise Verschiebevorganges dargestellt. Das Betätigungselement 5 ist nun insgesamt um beispielsweise 10 mm nach links verschoben, während der schlittenartig ausgebildete Verstellkörper 2 um beispielsweise 8 mm eine Linksverschiebung beziehungsweise eine vorwärts gerichtete Verschiebung erfahren hat.

Der Unterschied bei den beiden Verschiebewegen in der Größenordnung von etwa 2 mm entsteht durch die anfängliche Verschiebung des Betätigungselementes 5 gegenüber dem Verstellkörper 2, wie es in Fig. 3 gezeigt wird. Diese anfängliche Verschiebung des Betätigungselementes 5 um beispielsweise 2 mm dient für die gleitende Ein- und Ausrastung der ersten Ratschenelemente 8a, 8b sowie der Ausrastung der Bremse 14a. Ein derartig gleitender Ein- und Ausrastvorgang bewirkt eine Schonung der einzelnen Zähne 22 der Ratschenelemente und der einzelnen An- und Abtriebszähne der ersten Linearverzahnung 3 bei einem Zusammenspiel derjenigen.

Zudem wird ein gleitendes Ein- und Ausrasten durch ein Zahnprofil der Zähne 22 der ersten Ratschenelemente gefördert, welches sich dadurch auszeichnet, dass die Zähne auf der einen Seite eine abgeschrägte Flanke 22a und auf der anderen Seite eine senkrecht zu der Verschiebebewegung des Betätigungselements ausgerichtete Flanke 22b aufweisen.

Für die entgegengesetzte Verschiebebewegung des Betätigungselementes 5 sind an dem anderen ersten Ratschenelement 8b die Flanken in umgekehrter Reihenfolge angeordnet, wie es aus den Bezugszeichen 23a und 23b hervorgeht.

Die Beendigung des vorwärts gerichteten Verschiebevorganges wird durch den Zapfen 9b, der entlang eines Randes 25 der Ausnehmung 10b von dem Abschnitt 25a über den Abschnitt 25b zu dem Abschnitt 25c gleitet, bestimmt. Der Abschnitt 25c dient als Anschlag für den Zapfen 9b und verhindert eine weitere vorwärts gerichtete Verschiebung des Verstellkörpers 2 und des Betätigungselementes 5 gegenüber dem ortsfesten Basiselement 1, da die Ausnehmung 10b innerhalb des ortsfesten Basiselementes angeordnet ist.

Gleichzeitig findet eine ausrastende Schwenkbewegung des ersten Ratschenelementes 8a durch Führung des Zapfens 9a innerhalb des Randabschnittes 25a des Randes 25 der Ausnehmung 10a statt.

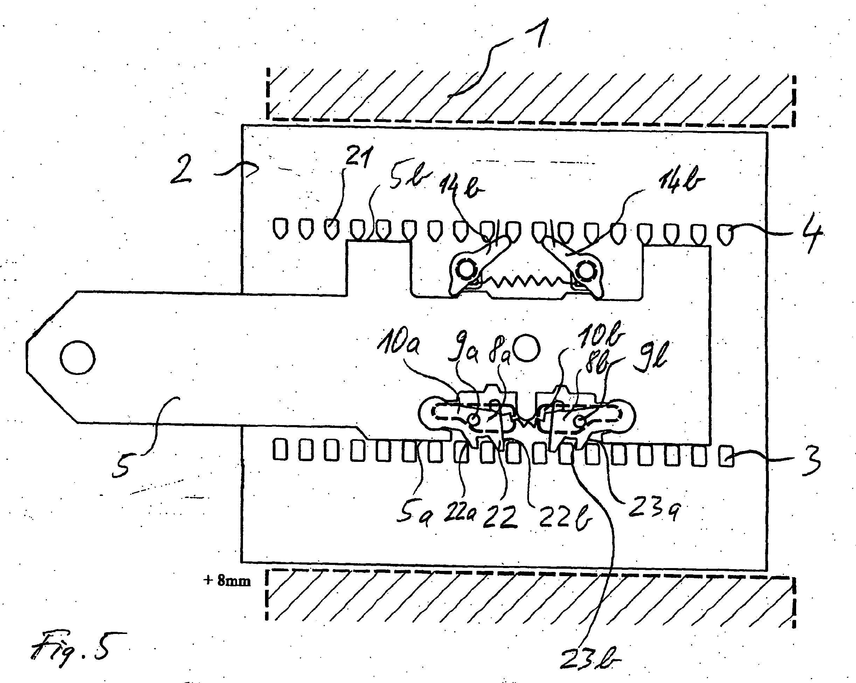

Wird nun das Betätigungselement 5 gemäß der Abbildung in Fig. 5 zurückgeschoben, also im Bezug auf die Bildebene nach rechts verschoben, so findet eine Relativverschiebung des Betätigungselementes 5 gegenüber dem Verstellkörper 2 statt, da eine Mitnahme des Verstellkörpers 2 durch das Betätigungselement aufgrund der ausgerasteten Stellung des ersten Ratschenelementes 8a nicht möglich ist. Demzufolge kann das Betätigungselement 5 um insgesamt 10 mm nach rechts gegenüber dem Verstellkörper 2 verschoben werden.

In Fig. 5 wird in einer Draufsicht die erfindungsgemäße Verstellvorrichtung mit einem zurückbewegten Betätigungselement 5 dargestellt. Das Betätigungselement 5 nimmt wiederum eine Nullstellung gegenüber dem ortsfesten Basiselement ein und bewirkt durch Verschiebung des Vorsprungs 19a ein Einrasten der Bremse 14a, welches zu einer Sperrstellung des Verstellkörpers 2 gegenüber dem ortsfesten Basiselement 1 führt.

Ebenso sind die ersten Ratschenelemente 8a, 8b wiederum in nicht vollständig eingerasteter Position durch Wirkung der Feder 11.

In dieser Nullstellung kann beispielsweise der Fahrzeugsitz, dessen Sitzplatte mit dem Verstellkörper 2 verbunden ist, benutzt werden, ohne dass eine ungewollte Verschiebung der Sitzplatte gegenüber dem ortsfesten Basiselement stattfinden kann. Alternativ kann durch eine vorwärts gerichtete Verschiebebewegung des Betätigungselementes 5 ein weiterer Verstellzyklus eingeleitet werden, um die Sitzplatte mit dem Verstellkörper 2 noch weiter zu verschieben.

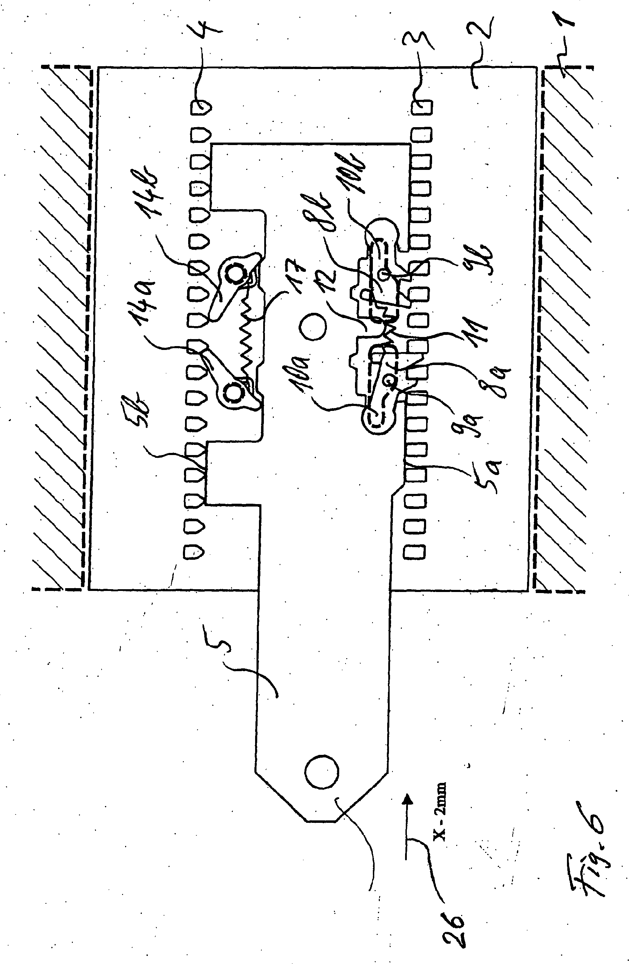

In Fig. 6 wird in einer Draufsicht die erfindungsgemäße Verstellvorrichtung zu Beginn eines rückwärts gerichteten Verstellvorganges, also einer Verschiebung des Verstellkörpers 2 in die Gegenrichtung gezeigt. Hierfür wird das Betätigungselement 5, wie es durch den Pfeil 26 angedeutet wird, um 2 mm nach rechts im Bezug auf die Bildebene verschoben, woraufhin die Bremse 14b aufgrund der Vorsprungsbewegung des Vorsprunges 19b ausrastet.

Ebenso rastet das erste Ratschenelement 8b aufgrund der Führung seines Zapfens 9b entlang der Randabschnitte 25a und 25b aus der Linearverzahnung 3 aus. Zeitgleich rastet das erste Ratschenelement 8a aufgrund der Führung seines Zapfens 9a entlang des Randabschnittes 25b in die Linearverzahnung 3 ein.

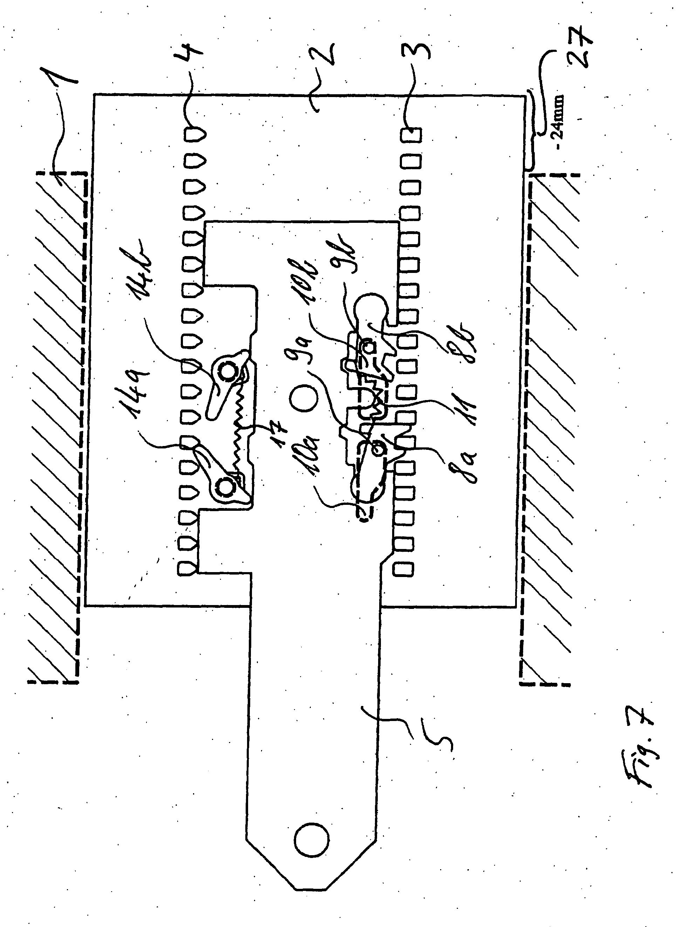

In Fig. 7 wird in einer Draufsicht die Verstellvorrichtung nach Beendigung eines rückwärts gerichteten Verschiebevorganges gezeigt, wobei in diesem Fall insgesamt drei Verschiebebeziehungsweise Verstellzyklen bei dazwischen liegendem nach vorne Verschieben des Betätigungselementes 5 durchgeführt wurden. Dies entspricht einer Verschiebung des Verstellkörpers 2 um insgesamt 24 mm, wie es durch das Bezugszeichen 27 wiedergegeben wird.

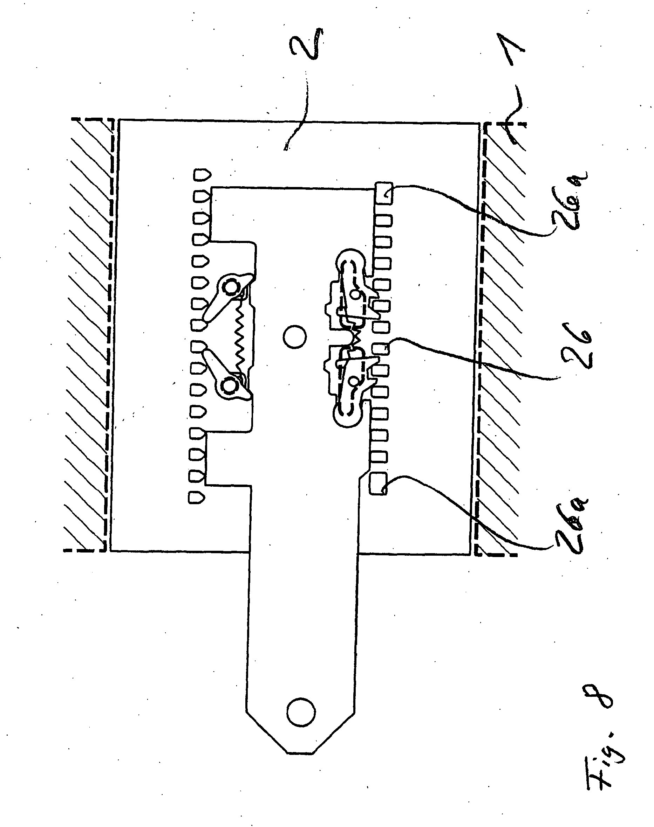

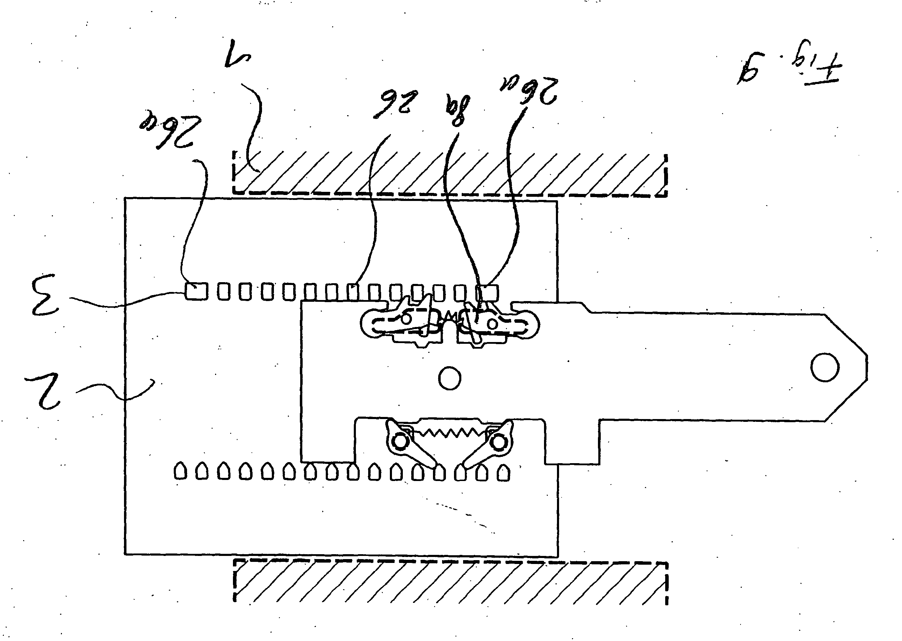

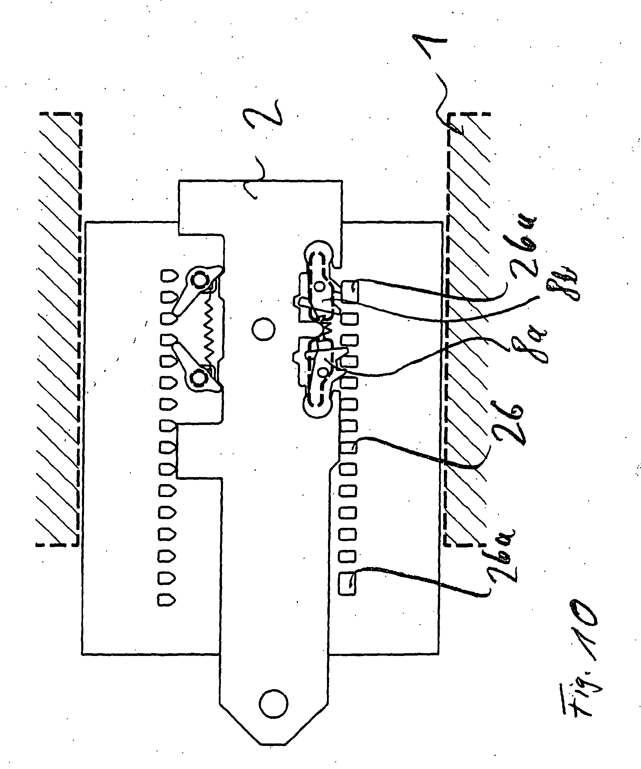

In den Figuren 8-10 wird eine zweite Ausführungsform der erfindungsgemäßen Verschiebevorrichtung gezeigt. Die zweite Ausführungsform unterscheidet sich von der ersten Ausführungsform darin, dass Endzähne 26a an Enden der ersten Linearverzahnung 3 derart ausgebildet sind, dass ihre Längenabmessungen in Bezug auf die Verschieberichtung doppelt so groß wie die Längenabmessungen der restlichen zwischen den Endzähnen 26a angeordneten Zähne 26 sind. Auf die Weise wird, sobald sich der Verstellkörper in einer vorbestimmbaren Endstellung befindet, wie sie in den Figuren 9 und 10 für eine vorwärts und rückwärts gerichtete Verschiebung gezeigt wird, das als Antrieb wirkende erste Ratschenelement 8a, 8b vollständig ausser Eingriff bezüglich der Linearverzahnung 3 gebracht. Dies hat zur Folge, dass kein weiterer Antrieb des Verstellkörpes 2 stattfinden kann. Der schlittenartige Verstellkörper 2 kann somit nicht mehr bewegt werden. Eine derartige automatische Blockierung der gesamten Verstellvorrichtung verhindert auf einfache Weise ein ungewolltes zu weites verschieben des Verstellkörpers 2 gegenüber dem ortsfesten Basiselement 1.

Für gleiche und gleichwirkende Teile sind in den Figuren die gleichen Bezugszeichen verwendet worden.

Sämtliche Bauteile sind einzeln und in Kombination als erfindungswesentlich anzusehen. Abwandlungen hiervon sind dem Fachmann geläufig. Beispielsweise kann das längliche Betätigungselement als Blattfederstahlblech ausgebildet sein, wobei die ersten Ratschenelemente und vorzugsweise auch die zweiten Ratschenelemente als federnde Arme an beiden Längsseiten des Betätigungselementes angeordnet sind und ebenso aus Blattfederstahl bestehen. Die Ratschenelemente und das Betätigungselement sind einteilig ausgebildet. Durch Verschieben der federblattartig ausgebildeten Ratschenelemente zusammen mit dem Betätigungselement über einen mit dem ortsfesten Basiselement verbundenen Vorsprung, der zwischen den Ratschenelementen und den Linearverzahnungen jeweils angeordnet ist, können die in ihrer Ruhestellung in die Linearverzahnung eingreifenden Ratschenelemente aus der Eingriffsposition in eine ausgerückte Stellung einzeln gebracht werden. Auf diese Weise ist das wahlweise Ausrücken der bezüglich der Verschiebebewegung des Betätigungselements entweder vorwärts gerichteten oder rückwärts gerichteten Ratschenelemente oder das gemeinsame Einrücken sämtlicher Ratschenelemente möglich. Die Linearverzahnung ist wiederum auf dem Verstellkörper angeordnet.

### Bezugszeichenliste

- 1: ortsfestes Basiselement
- 2: Verstellkörper
- 3: erste Linearverzahnung
- 4: zweite Linearverzahnung
- 5: Betätigungselement
- 5a, 5b: erste und zweite Längsseiten des Betätigungselementes
- 6: Ende des Betätigungselementes
- 7a, 7b: kreisrunde Aussparungen
- 8a, 8b: erste Ratschenelemente
- 9a, 9b: Zapfen
- 10a, 10b: Ausnehmungen
- 11: Zugfeder
- 12: Vorsprung
- 13: Ausnehmung
- 14a, 14b: Bremsen
- 15a, 15b: Schwenkzapfen der Bremsen
- 16a,16b: spitze Winkel
- 17: Zugfeder
- 18a, 18b: Rückwärtige Enden der Bremsen
- 19a, 19b: Vorsprünge am Betätigungselement
- 20a, 20b: Stirnseiten der Bremsen
- 21a, 21b: Abgeschrägte Flanken der Zähne
- 21: Zähne der zweiten Linearverzahnung
- 22: Zähne der ersten Ratschenelemente
- 22a, 23a: abgeschrägte Flanken der Zähne
- 22b, 23b: senkrechte Flanken der Zähne 22
- 24: Verschieberichtung
- 25: Randverlauf der Ausnehmungen
- 25a: erster Randverlaufsabschnitt
- 25b: zweiter Randverlaufsabschnitt
- 25c: dritter Randverlaufsabschnitt
- 26: Zähne der ersten Linearverzahnung
- 26a: Endzähne der ersten Linearverzahnung

## Patentansprüche

1. Ratschenartige Verstellvorrichtung zum ratschenden Verschieben eines Verstellkörpers (2) gegenüber einem ortsfesten Basiselement (1) mittels eines länglichen Betätigungselements (5), wobei das Betätigungselement (5) entlang beidseitig des Betätigungselements (5) an dem Verstellkörper (2) angebrachten Linearverzahnungen (4) verschiebbar ist und in die erste als An- und Abtriebsverzahnung wirkende Linearverzahnung (3) mittels erster Ratschenelemente (8a, 8b) einrastbar ist,
**gekennzeichnet durch**
mindestens zwei an dem ortsfesten Basiselement (1) schwenkbar gelagerte zweite Ratschenelemente (14a, 14b), die zum Sperren einer Verschiebebewegung des Verstellkörpers (2) gegenüber dem ortsfesten Basiselement (1) in die zweite als Sperr- und Bremsverzahnung wirkende Linearverzahnung (4) einrastbar sind.

2. Ratschenartige Verstellvorrichtung nach Anspruch 1,
**dadurch gekennzeichnet, dass**
jedes zweite Ratschenelement (14a, 14b) mittels mindestens eines entlang einer Längsseite (5b) des Betätigungselements (5) ausgebildeten Vorsprungs (19a, 19b) durch Verschieben des Betätigungselements (5) schwenkend ausrastbar ist.

3. Ratschenartige Verstellvorrichtung nach Anspruch 1 oder 2,
**dadurch gekennzeichnet, dass**
die zweiten Ratschenelemente (14a, 14b) derart ausgebildet sind, dass sie im eingerasteten Zustand ausgehend von einem Lagerzapfen (15a, 15b) zur schwenkbaren Lagerung der Ratschenelemente (14a, 14b) in einem spitzen Winkel (16a, 16b) zur Vedaufsrichtung der zweiten Linearverzahnung (4) stehen und mit ihrer Stirnseite (20a, 20b) Zähne (21) die zweite Linearverzahnung (4) berühren.

4. Ratschenartige Verstellvorrichtung nach Anspruch 3,
**dadurch gekennzeichnet, dass**
die spitzen Winkel (16a, 16b) der beiden zweiten Ratschenelemente (14a, 14b) derart angeordnet sind, dass eines der Ratschenelemente (14a) entgegen einer vorwärts gerichteten Verschiebebewegung und das weitere Ratschenelement (14b) entgegen einer rückwärts gerichteten Verschiebebewegung des Verstellkörpers (2) in Bezug auf das Basiselement (1) wirken.

5. Ratschenartige Verstellvorrichtung nach einem der vorangegangenen Ansprüche,
**dadurch gekennzeichnet, dass**
die zweiten Ratschenelemente (14a, 14b) mittels mindestens einer die Ratschenelemente (14a, 14b) verbindenden Zugfeder (17) unter Federkraftbeaufschlagung in die zweite Linearverzahnung (4) einrastbar sind.

6. Ratschenartige Verstellvorrichtung nach einem der vorangegangenen Ansprüche,
**dadurch gekennzeichnet, dass**
die ersten Ratschenelemente (8a, 8b) in dem Betätigungselement (5) um eine senkrecht zur Verschiebebewegung ausgerichtete fiktive Schwenkachse schwenkbar gelagert sind.

7. Ratschenartige Verstellvorrichtung nach einem der vorangegangenen Ansprüche,
**dadurch gekennzeichnet, dass**
das längliche Betätigungselement (5) an einer weiteren Längsseite (5a) voneinander beabstandet mit zwei kreisrunden Aussparungen (7a, 7b) ausgebildet ist, in welche jeweils ein erstes Ratschenelement (8a, 8b) mit einem kreisrundenartigen Lagerabschnitt schwenkbeweglich gelagert ist.

8. Ratschenartige Verstellvorrichtung nach einem der vorangegangenen Ansprüche,
**dadurch gekennzeichnet, dass**
das ortsfeste Basiselement (1) Ausnehmungen (10a, 10b) aufweist, in welchen jeweils ein auf jedem ersten Ratschenelement (8a, 8b) angeordneter Zapfen (9a, 9b) geführt wird, wobei die Zapfen (9a, 9b) orthogonal zur Verschieberichtung des Betätigungselements (5) ausgerichtet sind.

9. Ratschenartige Verstellvorrichtung nach Anspruch 8,
**dadurch gekennzeichnet, dass**
die Ausnehmungen (10a, 10b) jeweils einen derartigen Randverlauf (25) aufweisen, dass mittels eines Entlanggleitens der Zapfen (9a, 9b) an den Rändern (25) während der Verschiebebewegung des Betätigungselements (5) Schwenkbewegungen der ersten Ratschenelemente (8a, 8b) durchgeführt werden.

10. Ratschenartige Verstellvorrichtung nach Anspruch 9,
**dadurch gekennzeichnet, dass**
der Randverlauf (25) einen Anschlag (25c) für den sich darin bewegenden Zapfen (9a, 9b) für die Verschiebebewegung des Betätigungselementes (5) mit dem Verstellkörper (2) gegenüber dem ortsfesten Basiselement (1) darstellt.

11. Ratschenartige Verstellvorrichtung nach einem der Ansprüche 8 -10,
**dadurch gekennzeichnet, dass**
die ersten Ratschenelemente (8a, 8b) mittels mindestens einer über einen Vorsprung (12) der weiteren Längsseite (5a) des Betätigungselements (5) umgelenkten Zugfeder (11) gegen die erste Linearverzahnung (3) in Abhängigkeit von der Position der Zapfen (9a, 9b) innerhalb der Ausnehmungen (10a, 10b) drückbar sind.

12. Ratschenartige Verstellvorrichtung nach einem der vorangegangenen Ansprüche,
**dadurch gekennzeichnet, dass**
das Zahnprofil der Zähne (22) der ersten Ratschenelemente (8a, 8b) in Bezug auf die Verschieberichtung auf der einen Seite abgeschrägte Flanken (22a) und auf der anderen Seite senkrechte Flanken (22b) aufweist.

13. Ratschenartige Verstellvorrichtung nach einem der vorangegangenen Ansprüche,
**dadurch gekennzeichnet, dass**
an Enden der ersten Linearverzahnung (3) Endzähne (26a) angeordnet sind, deren Längenabmessungen in Bezug auf die Verschieberichtung größer als Längenabmessungen der restlichen Zähne (26) der ersten Linearverzahnung (3) sind.

14. Ratschenartige Verstellvorrichtung nach Anspruch 13,
**dadurch gekennzeichnet, dass**
die Längenabmessungen der Endzähne (26a) den zweifachen Längenabmessungen der restlichen Zähne (26) entsprechen.

15. Ratschenartige Verstellvorrichtung nach einem der vorangegangenen Ansprüche,
**dadurch gekennzeichnet, dass**
die ersten und zweiten Linearverzahnungen (3,4) zugleich als Führungsbegrenzungen für das verschiebbare Betätigungselement (5) dienen.

16. Ratschenartige Verstellvorrichtung nach einem der vorangegangenen Ansprüche,
**dadurch gekennzeichnet, dass**
das Betätigungselement (5) endseitig (6) mit einem Bedienungselement ausgestattet ist.

## Claims

1. Ratchet-type adjustment device for the ratcheting displacement of an adjustment body (2) with respect to a fixed base element (1) by means of an oblong actuating element (5), where the actuating element (5) can be displaced along linear toothed portions (4), which are fitted to the adjustment body (2) on either side of the actuating element (5), and latched into the first linear toothed portion (3), acting as driving toothed portion, by means of first ratchet elements (8a, 8b), **characterized by** at least two second ratchet elements (14a, 14b) mounted pivotably on the fixed base element (1), which ratchet elements can be latched into the second linear toothed portion (4), acting as blocking and braking toothed portion, to block a displacement movement of the adjustment body (2) with respect to the fixed base element (1).

2. Ratchet-type adjustment device according to Claim 1, **characterized in that** each second ratchet element (14a, 14b) can be pivotably unlatched by means of at least one protrusion (19a, 19b) formed along a longitudinal side (5b) of the actuating element (5), by displacing the actuating element (5).

3. Ratchet-type adjustment device according to Claim 1 or 2, **characterized in that** the second ratchet elements (14a, 14b) are designed such that, in the latched state, they are at an acute angle (16a, 16b) to the running direction of the second linear toothed portion (4), starting from a bearing pin (15a, 15b) for the pivotable mounting of the ratchet elements (14a, 14b), and with their end side (20a, 20b) come into contact with teeth (21) of the second linear toothed portion (4).

4. Ratchet-type adjustment device according to Claim 3, **characterized in that** the acute angles (16a, 16b) of the two second ratchet elements (14a, 14b) are arranged such that one of the ratchet elements (14a) acts against a forward displacement movement and the other ratchet element (14b) acts against a backward displacement movement of the adjustment body (2) with respect to the base element (1).

5. Ratchet-type adjustment device according to any of the preceding claims, **characterized in that** the second ratchet elements (14a, 14b) can be latched into the second linear toothed portion (4), under the effect of spring force, by means of at least one tension spring (17) which connects the ratchet elements (14a, 14b).

6. Ratchet-type adjustment device according to any of the preceding claims, **characterized in that** the first ratchet elements (8a, 8b) are mounted in the actuating element (5) such that they can pivot about an imaginary pivot axis oriented perpendicular to the displacement movement.

7. Ratchet-type adjustment device according to any of the preceding claims, **characterized in that** the oblong actuating element (5) is designed with two circular cut-outs (7a, 7b) at a distance from one another on a further longitudinal side (5a), in which cut-outs in each case a first ratchet element (8a, 8b) with a circular bearing section is mounted in a manner such that it can be moved in a pivoting manner.

8. Ratchet-type adjustment device according to any of the preceding claims, **characterized in that** the fixed base element (1) has recesses (10a, 10b) in which in each case a pin (9a, 9b) arranged on each first ratchet element (8a, 8b) is guided, the pins (9a, 9b) being oriented orthogonally with respect to the displacement direction of the actuating element (5).

9. Ratchet-type adjustment device according to Claim 8, **characterized in that** the recesses (10a, 10b) in each case have an edge profile (25) such that pivoting movements of the first ratchet elements (8a, 8b) are carried out by means of the pins (9a, 9b) sliding along the edges (25) during the displacement movement of the actuating element (5).

10. Ratchet-type adjustment device according to Claim 9, **characterized in that** the edge profile (25) acts as a stop (25c) for the pins (9a, 9b) that move therein for the displacement movement of the actuating element (5) with the adjustment body (2) with respect to the fixed base element (1).

11. Ratchet-type adjustment device according to any of Claims 8 to 10, **characterized in that** the first ratchet elements (8a, 8b) can be pressed against the first linear toothed portion (3), depending on the position of the pins (9a, 9b) within the recesses (10a, 10b), by means of at least one tension spring (11) deflected over a protrusion (12) of the further longitudinal side (5a) of the actuating element (5).

12. Ratchet-type adjustment device according to any of the preceding claims, **characterized in that** the tooth profile of the teeth (22) of the first ratchet elements (8a, 8b) on one side has sloping flanks (22a) and on the other side has perpendicular flanks (22b), with respect to the displacement direction.

13. Ratchet-type adjustment device according to any of the preceding claims, **characterized in that** end teeth (26a) are arranged at ends of the first linear toothed portion (3), the length dimensions of which end teeth, with respect to the displacement direction, are greater than the length dimensions of the remaining teeth (26) of the first linear toothed portion (3).

14. Ratchet-type adjustment device according to Claim 13, **characterized in that** the length dimensions of the end teeth (26a) correspond to twice the length dimensions of the remaining teeth (26).

15. Ratchet-type adjustment device according to any of the preceding claims, **characterized in that** the first and second linear toothed portions (3, 4) at the same time serve as guides for the displaceable actuating element (5).

16. Ratchet-type adjustment device according to any of the preceding claims, **characterized in that** the actuating element (5) is equipped with an operating element at the end (6).

## Revendications

1. Dispositif de réglage à cliquets pour le déplacement accompagné d'encliquetage d'un corps de réglage (2) par rapport à un élément de base (1) localement fixe, au moyen d'un élément d'actionnement (5) allongé, l'élément d'actionnement (5) étant déplaçable le long de dentures linéaires (4) montées de part et d'autre de l'élément d'actionnement (5) sur le corps de réglage (2) et étant encliquetable, au moyen de premiers éléments de cliquets (8a, 8b), dans la première denture linéaire (3) agissant comme denture menante et menée,
**caractérisé par**
au moins deux deuxièmes éléments à cliquet (14a, 14b), montés à pivotement sur l'élément de base (1) localement fixe et encliquetables, pour bloquer un déplacement à coulissement du corps de réglage (2) par rapport à l'élément de base (1) localement fixe, dans la deuxième denture (4) agissant comme denture de blocage et de freinage.

2. Dispositif de réglage à cliquets selon la revendication 1,
**caractérisé en ce que**
chaque deuxième élément à cliquet (14a, 14b) est susceptible d'être sorti d'encliquetage à l'aide d'au moins une saillie (19a, 19b) réalisée le long d'un côté longitudinal (5b) de l'élément d'actionnement (5), par un déplacement de l'élément d'actionnement (5).

3. Dispositif de réglage à cliquets selon la revendication 1 ou 2,
**caractérisé en ce que**
les deuxièmes éléments à cliquet (14a, 14b) sont réalisés de manière que, à l'état encliqueté, en partant d'un tourillon de palier (15a, 15b), servant au montage en palier pivotant des éléments d'encliquetage (14a, 14b), ils soient placés sous un angle (16a, 16b) aigu par rapport à la direction d'étendue de la deuxième denture linéaire (4) et entrent en contact, par leur face frontale (20a, 20b), avec des dents (21) de la deuxième denture linéaire (4).

4. Dispositif de réglage à cliquets selon la revendication 3,
**caractérisé en ce que**
les angles aigus (16a, 16b) des deux éléments à cliquet (14a, 14b) sont disposés de manière qu'un des éléments à cliquet (14a) agisse à l'encontre d'un déplacement orienté vers l'avant, et que l'autre élément à cliquet (14b) agisse à l'encontre d'un déplacement orienté vers l'arrière du corps de réglage (2), par rapport à l'élément de base (1).

5. Dispositif de réglage à cliquets selon l'une des revendications précédentes,
**caractérisé en ce que**
les deuxièmes éléments à cliquet (14a, 14b) sont encliquetables dans la deuxième denture linéaire (4) sous l'effet d'une sollicitation élastique, à l'aide d'au moins un ressort de traction (17) reliant les éléments à cliquet (14a, 14b).

6. Dispositif de réglage à cliquets selon l'une des revendications précédentes,
**caractérisé en ce que**
les premiers éléments à cliquet (8a, 8b) sont montés à pivotement autour d'un axe de pivotement fictif, orienté perpendiculairement à la direction de déplacement.

7. Dispositif de réglage à cliquets selon l'une des revendications précédentes,
**caractérisé en ce que**
l'élément d'actionnement (5) allongé, sur un autre côté long (5a), est réalisé avec deux évidements (7a, 7b) en forme de cercle, placés à distance l'un de l'autre, dans chacun desquels un premier élément de cliquet (8a, 8b), ayant un tronçon de palier du genre rond et circulaire, est monté avec une mobilité de pivotement.

8. Dispositif de réglage à cliquets selon l'une des revendications précédentes,
**caractérisé en ce que**
l'élément de base (1) localement fixe présente des évidements (10a, 10b), dans chacun desquels est guidé un tourillon (9a, 9b) disposé sur chaque élément à cliquet (8a, 8ab), les tourillons (9a, 9b) étant orientés perpendiculairement à la direction de déplacement de l'élément d'actionnement (5).

9. Dispositif de réglage à cliquets selon la revendication 8,
**caractérisé en ce que**
les évidements (10a, 10b) présentent chacun une allure de bordure (25) telle que des mouvements de pivotement des premiers éléments à cliquet (8a, 8b) soient effectués, au moyen d'un glissement des tourillons (9a, 9b) sur les bords (25), pendant le déplacement de coulissement de l'élément d'actionnement (5).

10. Dispositif de réglage à cliquets selon la revendication 9,
**caractérisé en ce que**
l'allure de bordure (25) constitue une butée (25c) pour le tourillon (9a, 9b) s'y déplaçant, pour le déplacement de l'élément d'actionnement (5) avec le corps de réglage (2) par rapport à l'élément de base (1) localement fixe.

11. Dispositif de réglage à cliquets selon l'une des revendications 8 à 10,
**caractérisé en ce que**
les premiers éléments à cliquet (8a, 8b) sont susceptibles d'être pressés, à l'aide d'au moins un ressort de traction (11) dévié sur une saillie (12) de l'autre côté longitudinal (5a) de l'élément d'actionnement (5), le passage se faisant contre la première denture linéaire (3) en fonction de la position des tourillons (9a, 9b) à l'intérieur des évidements (10a, 10b).

12. Dispositif de réglage à cliquets selon l'une des revendications précédentes,
**caractérisé en ce que**
le profil denté des dents (22) des premiers éléments à cliquet (8a, 8b) par rapport à la direction de déplacement, sur un côté présente des flancs (22a) aplatis et, sur l'autre côté, présente des flancs (22b) perpendiculaires.

13. Dispositif de réglage à cliquets selon l'une des revendications précédentes,
**caractérisé en ce que**
aux extrémités de la première denture linéaire (3) sont disposées des dents d'extrémité (26a), dont les dimensions en longueur par rapport à la direction de déplacement sont supérieures aux dimensions en longueur des dents (26) restantes de la première denture linéaire (3).

14. Dispositif de réglage à cliquets selon la revendication 13,
**caractérisé en ce que**
les dimensions en longueur des dents d'extrémité (26a) correspondent au double des dimensions en longueur des dents (26) restantes.

15. Dispositif de réglage à cliquets selon l'une des revendications précédentes,
**caractérisé en ce que**
les première et deuxième dentures (3, 4) servent en même temps de limitations de guidage à l'élément d'actionnement (5) déplaçable.

16. Dispositif de réglage à cliquets selon l'une des revendications précédentes,
**caractérisé en ce que**
l'élément d'actionnement (5) est équipé côté extrémité (6) d'un élément de manoeuvre.
